# EUROPÄISCHE PATENTSCHRIFT

(11) **EP 3 568 329 B1**
(45) Veröffentlichungstag und Bekanntmachung des Hinweises auf die Patenterteilung: **07.09.2022**
(21) Anmeldenummer: 17822664.3
(22) Anmeldetag: 20.12.2017
(51) Int. Cl.: B60T 13/74

(54) **VERFAHREN ZUM BETREIBEN EINER BREMSANLAGE UND BREMSANLAGE**
METHOD FOR OPERATING A BRAKE SYSTEM, AND BRAKE SYSTEM
PROCÉDÉ POUR FAIRE FONCTIONNER UN SYSTÈME DE FREINAGE ET SYSTÈME DE FREINAGE

(30) Priorität: 12.01.2017 DE 102017200420
(43) Veröffentlichungstag der Anmeldung: 20.11.2019
(73) Patentinhaber: Continental Automotive Technologies GmbH, 30165 Hannover (DE)
(72) Erfinder: BESIER, Marco, 65307 Bad Schwalbach (DE); DRUMM, Stefan, 55291 Saulheim (DE); BÖHM, Jürgen, 65558 Oberneisen (DE)
(74) Vertreter: Continental Corporation
(86) Internationale Anmeldenummer: PCT/EP2017/083840
(87) Internationale Veröffentlichungsnummer: WO 2018/130392

(56) Entgegenhaltungen:
- DE-A1-102015 224 618
- DE-A1-102015 224 621
- US-A1- 2013 213 025

## Beschreibung

Die Erfindung betrifft ein Verfahren zum Betreiben einer Bremsanlage für Kraftfahrzeuge, die in einer Brake-by-Wire-Betriebsart sowohl vom Fahrzeugführer als auch unabhängig vom Fahrzeugführer ansteuerbar ist, vorzugsweise in der Brake-by-Wire-Betriebsart betrieben wird, mit hydraulischen Radbremsen, wobei zwei Radbremsen hydraulisch einem ersten Bremskreis und zwei Radbremsen hydraulisch einem zweiten Bremskreis zugeordnet sind, einem unter Atmosphärendruck stehenden Druckmittelvorratsbehälter, einer elektronischen Steuer- und Regeleinheit, einer Druckmodulationseinheit zum Einstellen radindividueller Bremsdrücke, die aus dem Bremssystemdruck abgeleitet werden, einer an die Druckmodulationseinheit und den Druckmittelvorratsbehälter angeschlossenen elektrohydraulischen Druckbereitstellungseinrichtung, die den Bremssystemdruck an die Druckmodulationseinheit abgibt und zum Ausgleich ihrer Volumenbilanz aus dem Druckmittelvorratsbehälter Druckmittel nachsaugt, einem ersten und einem zweiten Druckzuschaltventil zum Verbinden der Druckbereitstellungseinrichtung von der Druckmodulationseinrichtung, wobei die Druckbereitstellungseinrichtung eine doppelt wirkende Kolben-Zylinder-Anordnung umfasst, wobei ein Kolben der Kolben-Zylinder-Anordnung zwei Druckräume voneinander trennt, wobei ein Druckaufbau im ersten Druckraum bei einer Rückwärtsbewegung des Kolbens und im zweiten Druckraum bei einer Vorwärtsbewegung des Kolbens erfolgt. Sie betrifft weiterhin eine Bremsanlage.

Bremsanlagen mit einer Druckbereitstellungseinrichtung mit einer doppelt wirkenden Kolben-Zylinder-Anordnung sind in der US 2013/0213025 A1 und der DE 10 2015 224618 A1 beschrieben.

Ein Verfahren zum Betreiben einer derartigen Bremsanlage ist aus der DE 10 2011 080 312 A1 bekannt. Dabei kann im Rückwärtshub des Kolbens mit einer kleineren Fläche bei betragsmäßig gleicher Aktuatorkraft ein höherer Druck erzeugt werden.

Nachteilig bei diesem Verfahren ist, dass eine derartige Flächenumschaltung nicht im Vorwärtshub durchgeführt wird.

Der Erfindung liegt daher die Aufgabe zugrunde, ein derartiges Verfahren dahingehend zu verbessern, dass auch im Vorwärtshub ein höherer Druck erzeugt werden kann. Weiterhin soll eine entsprechende Bremsanlage angegeben werden.

Diese Aufgabe wird erfindungsgemäß durch ein Verfahren gemäß Anspruch 1 gelöst.

Vorteilhafte Ausgestaltungen der Erfindung sind Gegenstand der Unteransprüche.

Die vorgegebene Situation ist bevorzugt der Bedarf eines besonders hohen Bremssystemdruckes. Ein besonders hoher Bremssystemdruck liegt besonders bevorzugt dann vor, wenn der einzustellende Bremssystemdruck größer als ein vorgegebener Schwellenwert ist.

Die Erfindung geht von der Überlegung aus, dass die Erzeugung eines höheren Druckes auch im Vorwärtshub nützlich sein kann. Im Vorwärtshub des Aktuators ist normalerweise die volle Kolbenfläche wirksam. Dies ist insbesondere vorteilhaft, um in kurzer Zeit bzw. mit entsprechendem Verfahrweg des Kolbens viel Bremsflüssigkeitsvolumen in die Radbremskreise zu verschieben. Die volle Kolbenfläche ist also vorteilhaft, um schnell Volumen zu verschieben. Um bei gegebener Aktuatorkraft noch höhere Drücke zu erzeugen, ist eine Umschaltung auf eine kleinere Fläche vorteilhaft.

Wie nunmehr erkannt wurde, kann eine Umschaltung auf eine kleinere Fläche auch beim Vorwärtshub erfolgen, indem das Zuschaltventil geöffnet wird, durch welches eine hydraulische Verbindung des ersten Druckraumes mit den Radbremsen ermöglicht wird, und durch Trennen der Verbindung des ersten Druckraumes mit dem Druckmittelvorratsbehälter sowie einer hydraulischen Verbindung der beiden Druckräume miteinander. In diesem Fall ist die hydraulische wirksame Fläche bei einem Vorwärtshub die Differenzfläche zwischen den beiden wirksamen Kolbenflächen.

Bevorzugt handelt es sich um eine Bremsanlage für Kraftfahrzeuge, die in einer Brake-by-Wire-Betriebsart sowohl vom Fahrzeugführer als auch unabhängig vom Fahrzeugführer ansteuerbar ist, vorzugsweise in der Brake-by-Wire-Betriebsart betrieben wird.

Die Bremsanlage weist bevorzugt auf ein Bremspedal zum Betätigen einer Pedalentkopplungseinheit mit einem Gehäuse, zwei hintereinander angeordneten Kolben, die in einem Gehäuse zwei Druckkammern begrenzen, auf die bei der Betätigung der Bremsanlage durch den Fahrzeugführer eine Betätigungskraft (Pedalkraft) ausgeübt wird und die bei unbetätigtem Bremspedal von Rückstellfedern in eine Ausgangsstellung positioniert werden.

Die Bremsanlage weist bevorzugt auf eine Wegerfassungseinrichtung, die den Betätigungsweg des Bremspedals oder eines mit dem Bremspedal verbundenen Kolbens erfasst.

Vorteilhafterweise ist ein Pedalgefühlsimulator vorgesehen, der in einer Betriebsart Brake-by-Wire dem Fahrzeugführer das gewohnte Bremspedalgefühl vermittelt.

Vorteilhafterweise weist die Druckmodulationseinheit pro Radbremse ein Einlassventil sowie ein Auslassventil zum Einstellen radindividueller Bremsdrücke auf.

Bevorzugt sind Trennventile zum Trennen der Druckräume des Hauptbremszylinders von der Druckmodulationseinheit vorgesehen, durch die im By-Wire-Betrieb die Druckräume des Hauptbremszylinders abgetrennt werden.

Für einen fahrerunabhängigen und aktiven Druckaufbau in den Radbremsen ist vorteilhafterweise eine an die Druckmodulationseinheit und den Druckmittelvorratsbehälter angeschlossene elektrohydraulische Druckbereitstellungseinrichtung vorgesehen, die den Bremssystemdruck an die Druckmodulationseinheit abgibt und zum Ausgleich ihrer Volumenbilanz aus dem Druckmittelvorratsbehälter Druckmittel nachsaugt.

Zum Verbinden der Druckbereitstellungseinrichtung mit der Druckmodulationseinrichtung (Druckmodulationseinheit) sind Druckzuschaltventile vorgesehen, wobei die Druckbereitstellungseinrichtung eine doppelt wirkende Kolben-Zylinder-Anordnung umfasst, wobei ein Kolben der Kolben-Zylinder-Anordnung zwei Druckräume voneinander trennt, wobei ein Druckaufbau im ersten Druckraum bei einer Rückwärtsbewegung des Kolbens und im zweiten Druckraum bei einer Vorwärtsbewegung des Kolbens erfolgt.

Vorteilhafterweise sind die beiden Bremskreise mit Hilfe eines Kreistrennventils trennbar hydraulisch miteinander verbunden, wobei zum Bremsdruckaufbau das Kreistrennventil geöffnet wird. Auf diese Weise werden die beiden Bremskreise hydraulisch miteinander verbunden.

Der zweite Druckraum wird bevorzugt durch eine Stirnfläche des Kolbens begrenzt, wobei der erste Druckraum durch eine Ringfläche des Kolbens begrenzt wird.

Die Ringfläche wird innseitig bevorzugt durch eine teilweise im ersten Druckraum verlaufende Kraftübertragungsstange begrenzt. Die Kraftübertragungsstange ist dabei mit dem Rotation-Translationsgetriebe gekoppelt.

In einer ersten bevorzugten Ausführungsform sind die Ringfläche des Kolbens und die Querschnittsfläche der Kraftübertragungsstange gleich groß dimensioniert. Dies hat den Vorteil, dass damit im Vorwärts- und Rückwärtshub der gleiche maximale Druck bzw. der gleiche Druck bei gegebener Aktuatorkraft erzeugt werden kann.

In einer zweiten bevorzugten Ausführungsform können die Ringfläche des Kolbens und die Querschnittsfläche der Kraftübertragungsstange unterschiedlich groß dimensioniert werden.

In einer hydraulischen Verbindung des ersten Druckraums mit dem Druckmittelvorratsbehälter ist bevorzugt ein Ablassventil angeordnet.

Das Ablassventil ist vorteilhafterweise als stromlos offenes 2/2-Wegeventil ausgebildet.

Zum Abbauen von Bremssystemdruck in nachfolgend beschriebener Situation wird bevorzugt das Ablassventil genutzt. Dies ist vorteilhaft, wenn durch eine ABS-Regelung oder andere Bremsregelfunktionen eine Konstellation erreicht wird, bei der das Bremsflüssigkeitsvolumen, welches sich in den Radbremsen befindet, bei der aktuellen Kolbenposition des Linearaktuators nicht mehr vollständig in die zweite Druckkammer aufgenommen werden kann, um den Systemdruck auf Atmosphärendruck abzusenken.

Besonders bevorzugt ist das Ablassventil analog ausgeführt, wobei das Ventil zum stufenlosen Druckabbau analog angesteuert wird.

Zum aktiven Bremsdruckaufbau in den Radbremsen werden vorteilhafterweise die Trennventile geschlossen.

Das erste Druckzuschaltventil verbindet den ersten Druckraum mit der Druckmodulationseinrichtung und das zweite Druckzuschaltventil verbindet den zweiten Druckraum mit der Druckmodulationseinrichtung, wobei vorzugsweise zum aktiven Bremsdruckaufbau mindestens eines der beiden Druckzuschaltventile geöffnet wird.

Vorteilhafterweise wird das erste Druckzuschaltventil nur bei einem Rückwärtshub geöffnet.

Vorteilhafterweise wird das zweite Druckzuschaltventil nur bei einem Vorwärtshub geöffnet.

Bei einem Vorwärtshub mit Flächenumschaltung werden bevorzugt beide Druckzuschaltventile geöffnet. Die Flächenumschaltung ist hierbei dadurch gegeben, dass als hydraulisch wirksame Fläche die Querschnittsfläche der Kraftübertragungsstange zum Tragen kommt.

Der Pedalgefühlsimulator ist bevorzugt hydraulisch betätigbar und weist einen Simulatorkolben, eine Simulatorkammer sowie eine von der Simulatorkammer durch den Simulatorkolben getrennte, eine Simulatorfeder aufnehmende Simulatorfederkammer auf, wobei die Simulatorkammer mit einer der Druckkammern in hydraulischer Verbindung steht und wobei die Wirkung des Wegsimulators in der "Brake-by-Wire"-Betriebsart mittels eines Simulatorfreigabeventils zugeschaltet wird, das eine Verbindung der Simulatorfederkammer mit dem Druckmittelvorratsbehälter ermöglicht.

In Bezug auf die Bremsanlage wird die oben genannte Aufgabe erfindungsgemäß gelöst mit Mitteln zum Durchführen eines oben genannten Verfahrens. Insbesondere ist vorteilhaft eine Steuer- und Regeleinheit vorgesehen, in der das Verfahren hardware- und/oder softwaremäßig implementiert ist. Die im Zusammenhang mit dem Verfahren genannten vorteilhaften Ausbildungen der Bremsanlage sind vorteilhafte Ausbildungen der Bremsanlage.

Die Vorteile der Erfindung liegen insbesondere darin, dass bei aktivem Druckaufbau bedarfsweise bei einem Vorwärtshub des Druckkolbens höhere Kräfte mittels einer Flächenumschaltung erzielt werden können. Durch eine geeignete Wahl der Stirn- und Ringflächen können bis zu drei hydraulisch wirksame Flächen genutzt werden. Durch ein gesteuertes Ablassen von Bremsflüssigkeit mit Hilfe des Ablassventils kann eine Verstimmung des hydraulischen Haushaltes beseitigt werden, so dass der Systemdruck präzise einstellbar ist.

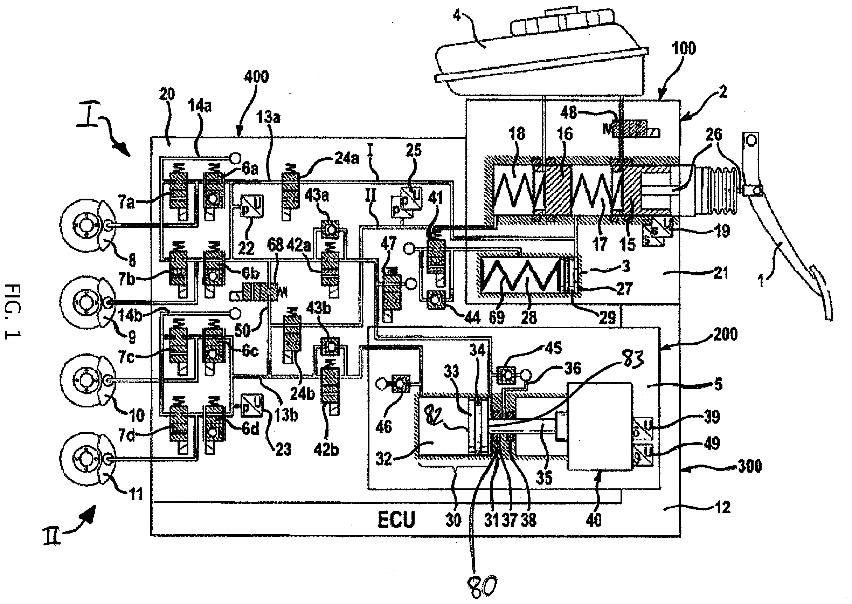

Ein Ausführungsbeispiel der Erfindung wird anhand einer Zeichnung näher erläutert. Darin zeigt in stark schematisierter Darstellung die einzige Figur eine Bremsanlage.

Die dargestellte Bremsanlage umfasst eine mittels eines Betätigungs- bzw. Bremspedals 1 betätigbare hydraulische Pedalentkopplungseinheit 2, einen mit der hydraulischen Pedalentkopplungseinheit 2 zusammenwirkenden Pedalgefühlsimulator 3, einen der hydraulischen Pedalentkopplungseinheit 2 zugeordneten Druckmittelvorratsbehälter 4, eine elektrisch steuerbare Druckbereitstellungseinrichtung 5, eine elektrisch steuerbare Druckmodulationseinrichtung 20, die Einlass- und Auslassventile 6a-6d, 7a-7d umfasst und an deren Ausgangsanschlüssen Radbremsen 8, 9, 10, 11 eines nicht dargestellten Kraftfahrzeuges angeschlossen sind, sowie eine elektronische Steuer- und Regeleinheit 12, die der Verarbeitung von Sensorsignalen und der Ansteuerung der elektrisch steuerbaren Komponenten dient.

In der "Brake-by-Wire"-Betriebsart werden die Eingangsanschlüsse der Einlassventile 6a-6d mittels Systemdruckleitungen 13a, 13b mit einem Druck versorgt, der als Systemdruck bezeichnet wird, wobei Drucksensoren 22, 23 zum Erfassen der in den Systemdruckleitungen 13a, 13b herrschenden Drücke vorgesehen sind. Die Systemdruckleitungen 13a, 13b bilden Bestandteile eines ersten sowie eines zweiten Bremskreises, die mit dem Bezugszeichen I bzw. II bezeichnet sind, wobei beispielsweise an den ersten Bremskreis I die einer Vorderachse zugeordneten Radbremsen 8, 9 und an den zweiten Bremskreis II die einer Hinterachse des Kraftfahrzeuges zugeordneten Radbremsen 10, 11 angeschlossen sind. Rücklaufleitungen 14a, 14b, die an die Ausgangsanschlüsse der Auslassventile 7a-7d angeschlossen sind, verbinden die Auslassventile 7a-7d mit dem drucklosen Druckmittelvorratsbehälter 4 (offenes System).

Wie der FIG. weiterhin zu entnehmen ist, weist die hydraulische Pedalentkopplungseinheit 2, die als eine Betätigungseinheit der erfindungsgemäßen Bremsanlage angesehen werden kann, in einem (Hauptbremszylinder-) Gehäuse 21 zwei hintereinander angeordnete hydraulische Kolben 15, 16 auf, die hydraulische Druckkammern 17, 18 begrenzen, die zusammen mit den Kolben 15, 16 einen zweikreisigen Hauptbremszylinder bzw. einen Tandemhauptzylinder bilden. Die Druckkammern 17, 18 stehen einerseits über in den Kolben 15, 16 ausgebildete radiale Bohrungen mit dem Druckmittelvorratsbehälter 4 in Verbindung, wobei diese Bohrungen durch eine Relativbewegung der Kolben 17, 18 im Gehäuse 21 absperrbar sind, und andererseits mit den vorhin erwähnten Systemdruckleitungen 13a, 13b, an die Eingangsanschlüsse der vorhin erwähnten Druckmodulations- bzw. Einlassventile 6a-6d angeschlossen sind. In den hydraulischen Systemdruckleitungen 13a, 13b sind je ein Trennventil 24a, 24b eingefügt, die als elektrisch betätigbare, vorzugsweise stromlos offene (SO-)2/2-Wegeventile ausgebildet sind. Ein an den Druckraum 18 angeschlossener Drucksensor 25 erfasst den im Druckraum 18 durch ein Verschieben des zweiten Kolbens 16 aufgebauten Druck. Außerdem nehmen die Druckkammern 17, 18 nicht näher bezeichnete Rückstellfedern auf, die die Kolben 15, 16 entgegen der Betätigungsrichtung vorspannen. Eine am Bremspedal 1 angekoppelte Kolbenstange 26 wirkt dabei mit dem ersten (Hauptzylinder-)Kolben 15 zusammen, wobei der Betätigungsweg des Bremspedals 1 bzw. des mit dem Bremspedal gekoppelten Kolbens 15 von einem vorzugsweise redundant ausgeführten Wegsensor 19 erfasst wird.

Außerdem ist aus der zeichnerischen Darstellung der erfindungsgemäßen Bremsanlage ersichtlich, dass die Pedalgefühlsimulatoreinrichtung 3 hydraulisch ausgeführt ist und im Wesentlichen aus einer Simulatorkammer 27, einer Simulatorfederkammer 28 mit Simulatorfeder 69 sowie einem die beiden Kammern 27, 28 voneinander trennenden Simulatorkolben 29 besteht. Dabei ist die Simulatorkammer 27 an den ersten Druckraum 17 der Tandemhauptzylinders 2 angeschlossen, während die Simulatorfederkammer 28 unter Zwischenschaltung eines elektrisch betätigbaren Simulatorfreigabeventils 41 mit dem oben genannten Druckmittelvorratsbehälter 4 verbunden ist. Ein dem Simulatorfreigabeventil 41 parallel geschaltetes Rückschlagventil 44 ist an die Simulatorfederkammer 28 angeschlossen und ermöglicht unabhängig vom Schaltzustand des Simulatorfreigabeventils 41 und unabhängig von einer Drosselwirkung der hydraulischen Simulator-Abströmverbindungen ein weitgehend ungedrosseltes Einströmen des Druckmittels in die Simulatorfederkammer 28.

Weiterhin ist in der FIG. erkennbar, dass die elektrohydraulische Druckbereitstellungseinrichtung 5 als eine hydraulische, doppelt wirkende Zylinder-Kolben-Anordnung 30 ausgebildet ist, deren Kolben 33 mittels einer Kraftübertragungsstange 35 von einem schematisch angedeuteten Elektromotor 40 unter Zwischenschaltung eines nicht dargestellten Rotations-Translationsgetriebes betätigbar ist. Der Elektromotor 40 sowie das Rotations-Translationsgetriebe bilden einen Linearaktuator, wobei ein der Erfassung der Rotorlage des Elektromotors 40 dienender, lediglich schematisch gezeichneter Rotorlagensensor mit dem Bezugszeichen 39 versehen ist. Weitere Sensoren, wie beispielsweise ein Temperatursensor 49, liefern der elektronischen Steuer- und Regeleinheit 12 Zustandsinformationen zum Elektromotor 40 bzw. zum Linearaktuator.

Die dem Linearaktuator zugewandte Ringfläche 80 des Kolbens 33 begrenzt einen ersten Druckraum 31, während seine in der Zeichnung nach links weisende Stirnfläche 82 einen zweiten hydraulischen Druckraum 32 begrenzt. Die hydraulisch wirksame Querschnittsfläche des ersten Druckraums 31 ist um die Querschnittsfläche 83 der Stange 35 vermindert, die der Kraftübertragung zwischen Linearaktuator 40 und Kolben-Zylinder-Anordnung 30 dient und die in den ersten Druckraum 31 eintaucht. Der erste Druckraum 31 ist dabei gegenüber einer schematisch angedeuteten, zum Druckmittelvorratsbehälter 4 führenden hydraulischen Anbindung 36 durch ein erstes Dichtelement 37 abgedichtet, das dazu eingerichtet ist, gegen ein Druckgefälle vom ersten Druckraum 31 zur hydraulischen Anbindung 36 abzudichten. Ein zweites Dichtelement 38 dichtet die hydraulische Anbindung 36 gegenüber dem Linearaktuator 40 ab. Ein drittes am Kolben 33 angeordnetes Dichtelement 34 dichtet den ersten Druckraum 31 gegenüber dem zweiten Druckraum 32 ab. Außerdem stehen die beiden Druckräume 31, 32 über zum Druckmittelvorratsbehälter 4 schließende Rückschlagventile 45, 46 mit diesem in Verbindung, wobei zusätzlich zwischen dem ersten Druckraum 31 und dem Druckmittelvorratsbehälter 4 ein elektrisch betätigbares, vorzugsweise stromlos offenes (SO-)2/2-Wegeventil bzw. Ablassventil 47 angeordnet ist. Der FIG. ist schließlich zu entnehmen, dass die beiden Druckräume 31, 32 durch Öffnen von elektrisch betätigbaren Zuschaltventilen 42a, 42b, die in den vorhin erwähnten Systemdruckleitungen 13a, 13b eingefügt sind, mit den Bremskreisen I, II bzw. Eingangsanschlüssen der Einlassventile 6a-6d verbindbar sind. Dabei ist den Zuschaltventilen 42a, 42b je ein zu den Druckräumen 31, 32 schließendes Rückschlagventil 43a, 43b parallel geschaltet. Die beiden Bremskreise I, II bzw. die Systemdruckleitungen sind über eine weitere hydraulische Verbindung 50 verbunden, die mittels eines elektrisch betätigbaren, vorzugsweise stromlos geschlossenen (SG-)2/2-Wegeventils 68 freigebbar bzw. absperrbar ist. Ergänzend ist noch zu erwähnen, dass sämtliche kreisförmigen Symbole, die beispielsweise den Leitungsabschnitten 14a, b, den Rückschlagventilen 45, 46, usw. zugeordnet werden, zum Druckmittelvorratsbehälter 4 führende hydraulische Leitungen darstellen.

Im Normalfall werden in der Brake-by-Wire-Betriebsart die Trennventile 24a, 24b geschlossen, sodass die Druckräume 17, 18 des Tandemhauptbremszylinders von den Bremskreisen I, II hydraulisch getrennt werden. Das Simulatorventil 41 wird geöffnet. Das Verbindungsventil 68 wird geöffnet, sodass die beiden Bremskreise verbunden sind. Das Zuschaltventil 42b wird geöffnet, so dass aktiv Druck in den Radbremsen 8, 9, 10, 11 mit Hilfe der Druckbereitstellungseinrichtung 5 aufgebaut werden kann. Bei einem Vorwärtshub wird dabei der Kolben 33 in den Druckraum 32 verschoben, so dass durch die Stirnfläche 82 des Kolbens 33 Bremsflüssigkeit in die Bremskreise I, II verschoben wird. Auf diese Weise kann möglichst viel Bremsmittelvolumen in die Radbremsen 8, 9, 10, 11 verschoben werden. Somit kann durch Vorwärtshub des Aktuators Systemdruck erhöht bzw. aufgebaut werden und durch Rückwärtshub wieder verringert bzw. abgebaut werden.

In Situationen, in denen beim Vorwärtshub höhere Drücke erzielt werden sollen, schlägt die Erfindung einen Druckaufbau mit Flächenumschaltung vor. Dazu wird zusätzlich das Zuschaltventil 42a geöffnet und das Ablassventil 47 geschlossen. Das Kreistrennventil 68 wird aktiv geöffnet und die beiden Zuschaltventile 42a, 42b sind oder werden aktiv geöffnet. Wie üblich im By-Wire-Betrieb sind die Trennventile 24a, 24b geschlossen und das Simulatorventil 41 ist aktiv geöffnet. Durch diese Schaltung sind die beiden Druckkammern 31, 32 hydraulisch miteinander verbunden. Hydraulisch wirksam ist nur noch die Querschnittsfläche 83 der Kraftübertragungsstange 35, welche in die Bremskreise I, II Bremsflüssigkeit ausstößt. Bei betragsmäßig gleicher Aktuatorkraft kann auf diese Weise beim Vorwärtshub des Aktuators bei betragsmäßig gleicher Aktuatorkraft ein höherer Druck erzeugt werden. Dies wird erzielt durch die kleinere wirksame Kolbenfläche gegenüber der Stirnfläche 82.

Die Ringfläche 80 des Kolbens und die Querschnittsfläche 83 der Kraftübertragungsstange 35 können gleich groß dimensioniert werden, so dass im Vorwärts- und Rückwärtshub bei gegebener Aktuatorkraft der gleiche Druck erzeugt werden kann. Falls eine Variation von unterschiedlich großen hydraulisch wirksamen Flächen gewünscht wird, können Stirnfläche 82, Ringfläche 80 und Querschnittsfläche 83 unterschiedlich groß gewählt werden.

Mit Hilfe des vorzugsweise analog ausgeführten Ablassventils 47 wird bevorzugt Bremsflüssigkeit in den Druckmittelvorratsbehälter 4 abgelassen. Dies geschieht bevorzugt dann, wenn durch Regelvorgänge das Bremsflüssigkeitsvolumen in den Radbremsen bzw. in den Bremskreisen I, II nicht mehr in die Druckkammer 32 aufgenommen werden kann. Das heißt, bei einem Hub des Kolbens 33 in Richtung des Aktuators (Motor + Rotationstranslationsgetriebe) bei geschlossenem Zuschaltventil 42a und geöffnetem SO-Ablassventil 47, wie im by-wie-Betrieb üblich, kann nicht das überschüssige Bremsflüssigkeitsvolumen der Radbremsen 8, 9, 10, 11 in der Kammer 32 aufgenommen werden. In dieser Situation ist ein analoger stufenloser Druckabbau über das Ablassventil 47 vorteilhaft. Dadurch wird eine Abweichung zum gewünschten Bremssystemdruck verhindert.

## Patentansprüche

1. Verfahren zum Betreiben einer Bremsanlage für Kraftfahrzeuge mit
a) hydraulischen Radbremsen (8, 9, 10, 11), wobei zwei Radbremsen (8, 9) hydraulisch einem ersten Bremskreis (I) und zwei Radbremsen (10, 11) hydraulisch einem zweiten Bremskreis (II) zugeordnet sind;
b) einem den unter Atmosphärendruck stehenden Druckmittelvorratsbehälter (4);
c) insbesondere einer elektronischen Steuer- und Regeleinheit (12);
d) einer Druckmodulationseinheit (20) zum Einstellen radindividueller Bremsdrücke, die aus dem Bremssystemdruck abgeleitet werden;
e) einer an die Druckmodulationseinheit (20) und den Druckmittelvorratsbehälter (4) angeschlossenen elektrohydraulischen Druckbereitstellungseinrichtung (5), die den Bremssystemdruck an die Druckmodulationseinheit (20) abgibt und zum Ausgleich ihrer Volumenbilanz aus dem Druckmittelvorratsbehälter (4) Druckmittel nachsaugt, wobei die Druckbereitstellungseinrichtung (5) eine doppelt wirkende Kolben-Zylinder-Anordnung (30) umfasst, wobei ein Kolben (33) der Kolben-Zylinder-Anordnung (30) zwei Druckräume (31, 32) voneinander trennt, wobei ein Druckaufbau im ersten Druckraum (31) bei einer Rückwärtsbewegung des Kolbens (33) und im zweiten Druckraum (32) bei einer Vorwärtsbewegung des Kolbens (33) erfolgt;
f) einem ersten Druckzuschaltventil (42a) zum Verbinden des ersten Druckraums (31) der Druckbereitstellungseinrichtung (5) mit der Druckmodulationseinheit (20) und einem zweiten Druckzuschaltventil (42b) zum Verbinden des zweiten Druckraums (32) der Druckbereitstellungseinrichtung (5) mit der Druckmodulationseinheit (20),
**dadurch gekennzeichnet, dass**
bei einem Bremsdruckaufbau von einem Vorwärtshub des Kolbens (33) der Kolben-Zylinder-Anordnung (30) bei einer vorgegebenen Situation, insbesondere bei Bedarf eines besonders hohen Bremssystemdruckes, das erste Druckzuschaltventil (42a) geöffnet wird und der erste Druckraum (31) hydraulisch vom Druckmittelvorratsbehälter (4) getrennt wird, wobei die beiden Druckräume (31, 32) hydraulisch miteinander verbunden werden.

2. Verfahren nach Anspruch 1, wobei die beiden Bremskreise (I, II) mit Hilfe eines Kreistrennventils (68) trennbar hydraulisch miteinander verbunden sind, und wobei zum Bremsdruckaufbau das Kreistrennventil (68) geöffnet wird.

3. Verfahren nach Anspruch 1 oder 2, wobei der zweite Druckraum (32) durch eine Stirnfläche des Kolbens (33) begrenzt wird, und wobei der erste Druckraum (31) durch eine Ringfläche des Kolbens (33) begrenzt wird.

4. Verfahren nach Anspruch 3, wobei die Ringfläche innseitig durch eine teilweise im ersten Druckraum (31) verlaufende Kraftübertragungsstange (35) begrenzt wird.

5. Verfahren nach Anspruch 4, wobei die Ringfläche des Kolbens (33) und die Querschnittsfläche der Kraftübertragungsstange (35) gleich groß dimensioniert sind.

6. Verfahren nach Anspruch 4, wobei Ringfläche des Kolbens (33) und die Querschnittsfläche der Kraftübertragungsstange (35) unterschiedlich groß dimensioniert sind.

7. Verfahren nach einem der Ansprüche 1 bis 6, wobei in einer hydraulischen Verbindung des ersten Druckraums (31) mit dem Druckmittelvorratsbehälter (4) ein Ablassventil (47) angeordnet ist.

8. Verfahren nach Anspruch 7, wobei das Ablassventil (47) als stromlos offenes 2/2-Wegeventil ausgebildet ist.

9. Verfahren nach Anspruch 7 oder 8, wobei zum Abbauen von Bremssystemdruck das Ablassventil (47) geöffnet wird.

10. Verfahren nach Anspruch 9, wobei das Ablassventil (47) analog ausgeführt ist, und wobei das Ventil zum stufenlosen Druckabbau analog angesteuert wird.

11. Verfahren nach einem der Ansprüche 1 bis 10, wobei zum aktiven Bremsdruckaufbau die Trennventile (24a, 24b) geschlossen werden.

12. Verfahren nach einem der Ansprüche 1 bis 11, wobei zum aktiven Bremsdruckaufbau mindestens eines der beiden Druckzuschaltventile (42a, 42b) geöffnet wird.

13. Verfahren nach Anspruch 12, wobei das erste Druckzuschaltventil (42a) nur bei einem Rückwärtshub geöffnet wird.

14. Verfahren nach Anspruch 12, wobei das zweite Druckzuschaltventil (42b) nur bei einem Vorwärtshub geöffnet wird.

15. Verfahren nach Anspruch 12, wobei bei einem Vorwärtshub mit Flächenumschaltung beide Druckzuschaltventile (42a, 42b) geöffnet werden.

16. Bremsanlage mit Mitteln (12) zum Durchführen eines Verfahrens nach einem der vorherigen Ansprüche.

## Claims

1. Method for operating a brake system for motor vehicles having
a) hydraulic wheel brakes (8, 9, 10, 11), wherein two wheel brakes (8, 9) are hydraulically assigned to a first brake circuit (I) and two wheel brakes (10, 11) are hydraulically assigned to a second brake circuit (II);
b) a pressure medium reservoir (4) which is under atmospheric pressure;
c) in particular an electronic open-loop and closed-loop control unit (12);
d) a pressure modulation unit (20) for setting wheel-specific brake pressures, which are derived from the brake system pressure;
e) an electrohydraulic pressure provision device (5) which is connected to the pressure modulation unit (20) and to the pressure medium reservoir (4) and which outputs the brake system pressure to the pressure modulation unit (20) and which, for the compensation of its volume balance, draws in pressure medium from the pressure medium reservoir (4), wherein the pressure provision device (5) comprises a double-acting piston-cylinder arrangement (30), wherein a piston (33) of the piston-cylinder arrangement (30) separates two pressure spaces (31, 32) from one another, wherein a pressure build-up occurs in the first pressure space (31) during a backward movement of the piston (33) and occurs in the second pressure space (32) during a forward movement of the piston (33);
f) a first pressure activation valve (42a) for connecting the first pressure space (31) of the pressure provision device (5) to the pressure modulation device (5), and a second pressure activation valve (42b) for connecting the second pressure space (32) of the pressure provision device (5) to the pressure modulation device (5),
**characterized in that,**
during a brake pressure build-up by a forward stroke of the piston (33) of the piston-cylinder arrangement (30) in a predefined situation, in particular in the case of demand for a particularly high brake system pressure, the first pressure activation valve (42a) is opened and the first pressure space (31) is hydraulically separated from the pressure medium reservoir (4), wherein the two pressure spaces (31, 32) are hydraulically connected to one another.

2. Method according to Claim 1, wherein the two brake circuits (I, II) are hydraulically connected to one another in a manner separable by means of a circuit separation valve (68), and wherein, for the brake pressure build-up, the circuit separation valve (68) is opened.

3. Method according to Claim 1 or 2, wherein the second pressure space (32) is delimited by an end surface of the piston (33), and wherein the first pressure space (31) is delimited by an annular surface of the piston (33).

4. Method according to Claim 3, wherein the annular surface is delimited at the inside by a force transmission rod (35) which runs partially in the first pressure space (31).

5. Method according to Claim 4, wherein the annular surface of the piston (33) and the cross-sectional area of the force transmission rod (35) are of the same dimensions.

6. Method according to Claim 4, wherein the annular surface of the piston (33) and the cross-sectional area of the force transmission rod (35) are of different dimensions.

7. Method according to any of Claims 1 to 6, wherein a discharge valve (47) is arranged in a hydraulic connection of the first pressure space (31) to the pressure medium reservoir (4).

8. Method according to Claim 7, wherein the discharge valve (47) is designed as a normally open 2/2 directional valve.

9. Method according to Claim 7 or 8, wherein, for the dissipation of brake system pressure, the discharge valve (47) is opened.

10. Method according to Claim 9, wherein the discharge valve (47) is of analogue design, and wherein the valve is activated in analogue fashion for the continuously variable dissipation of pressure.

11. Method according to any of Claims 1 to 10, wherein, for the active brake pressure build-up, the separation valves (24a, 24b) are closed.

12. Method according to any of Claims 1 to 11, wherein, for the active brake pressure build-up, at least one of the two pressure activation valves (42a, 42b) is opened.

13. Method according to Claim 12, wherein the first pressure activation valve (42a) is opened only during a backward stroke.

14. Method according to Claim 12, wherein the second pressure activation valve (42b) is opened only during a forward stroke.

15. Method according to Claim 12, wherein, during a forward stroke with surface switchover, both pressure activation valves (42a, 42b) are opened.

16. Brake system having means (12) for carrying out a method according to any of the preceding claims.

## Revendications

1. Procédé permettant de faire fonctionner un système de freinage pour véhicules automobiles, comprenant
a) des freins de roue hydrauliques (8, 9, 10, 11), dans lequel deux freins de roue (8, 9) sont associés hydrauliquement à un premier circuit de freinage (I) et deux freins de roue (10, 11) sont associés hydrauliquement à un deuxième circuit de freinage (II);
b) un réservoir de fluide sous pression (4) soumis à la pression atmosphérique ;
c) en particulier une unité de commande et de régulation électronique (12) ;
d) une unité de modulation de pression (20) servant à régler des pressions de freinage individuellement pour chaque roue qui sont dérivées à partir de la pression de système de freinage ;
e) un dispositif générateur de pression électrohydraulique (5) raccordé à l'unité de modulation de pression (20) et au réservoir de fluide sous pression (4) et qui fournit la pression de système de freinage à l'unité de modulation de pression (20) et qui, pour compenser son bilan volumique, réaspire du fluide sous pression à partir du réservoir de fluide sous pression (4), le dispositif générateur de pression (5) comprenant un ensemble piston/cylindre à double effet (30), un piston (33) de l'ensemble piston/cylindre (30) séparant deux chambres de pression (31, 32), un établissement de pression ayant lieu dans la première chambre de pression (31) lors d'un mouvement de recul du piston (33) et dans la deuxième chambre de pression (32) lors d'un mouvement d'avance du piston (33) ;
f) une première soupape de mise en circuit de pression (42a) servant à raccorder la première chambre de pression (31) du dispositif générateur de pression (5) à l'unité de modulation de pression (20), et une deuxième soupape de mise en circuit de pression (42b) servant à raccorder la deuxième chambre de pression (32) du dispositif générateur de pression (5) à l'unité de modulation de pression (20),
**caractérisé en ce que**
lors d'un établissement de pression de freinage, une course avant du piston (33) de l'ensemble piston/cylindre (30), dans une situation prédéfinie, en particulier en cas de demande d'une pression de système de freinage particulièrement élevée, ouvre la première soupape de mise en circuit de pression (42a) et sépare la première chambre de pression (31) hydrauliquement du réservoir de fluide sous pression (4), les deux chambres de pression (31, 32) étant raccordées hydrauliquement l'une à l'autre.

2. Procédé selon la revendication 1, dans lequel les deux circuits de freinage (I, II) sont raccordés hydrauliquement ensemble de manière séparable à l'aide d'une vanne de séparation circulaire (68), et dans lequel on ouvre la vanne de séparation circulaire (68) pour établir la pression de freinage.

3. Procédé selon la revendication 1 ou 2, dans lequel la deuxième chambre de pression (32) est délimitée par une face frontale du piston (33), et dans lequel la première chambre de pression (31) est délimitée par une surface annulaire du piston (33).

4. Procédé selon la revendication 3, dans lequel la surface annulaire est délimitée côté intérieur par une barre de transmission de force (35) s'étendant partiellement dans la première chambre de pression (31).

5. Procédé selon la revendication 4, dans lequel la surface annulaire du piston (33) et la superficie de la section de la barre de transmission de force (35) sont de dimension identique.

6. Procédé selon la revendication 4, dans lequel la surface annulaire du piston (33) et la superficie de la section de la barre de transmission de force (35) sont de dimension différente.

7. Procédé selon l'une quelconque des revendications 1 à 6, dans lequel une soupape d'évacuation (47) est disposée dans un raccordement hydraulique de la première chambre de pression (31) au réservoir de fluide sous pression (4).

8. Procédé selon la revendication 7, dans lequel la soupape d'évacuation (47) est réalisée sous la forme d'un distributeur 2/2 voies ouvert sans tension.

9. Procédé selon la revendication 7 ou 8, dans lequel on ouvre la soupape d'évacuation (47) pour relâcher la pression de système de freinage.

10. Procédé selon la revendication 9, dans lequel la soupape d'évacuation (47) est réalisée de manière analogique, et la soupape est pilotée de manière analogique pour relâcher la pression en continu.

11. Procédé selon l'une quelconque des revendications 1 à 10, dans lequel on ferme les vannes de séparation (24a, 24b) pour établir activement la pression de freinage.

12. Procédé selon l'une quelconque des revendications 1 à 11, dans lequel on ouvre l'une des deux soupapes de mise en circuit de pression (42a, 42b) pour établir activement la pression de freinage.

13. Procédé selon la revendication 12, dans lequel la première soupape de mise en circuit de pression (42a) n'est ouverte que pendant une course arrière.

14. Procédé selon la revendication 12, dans lequel la deuxième soupape de mise en circuit de pression (42b) n'est ouverte que pendant une course avant.

15. Procédé selon la revendication 12, dans lequel, pendant une course avant avec commutation de surface, les deux soupapes de mise en circuit de pression (42a, 42b) sont ouvertes.

16. Système de freinage comprenant des moyens (12) pour exécuter un procédé selon l'une quelconque des revendications précédentes.
